**Europäisches Patentamt**

**European Patent Office**

**Office européen des brevets**

(11) Veröffentlichungsnummer: **0 306 591**

**A1**

## (12) EUROPÄISCHE PATENTANMELDUNG

(21) Anmeldenummer: 87730105.1

(22) Anmeldetag: 09.09.87

(51) Int. Cl.⁴: **B41J 29/02 , F16B 21/16**

(43) Veröffentlichungstag der Anmeldung:
**15.03.89 Patentblatt 89/11**

(84) Benannte Vertragsstaaten:
**AT BE CH DE FR GB IT LI NL**

(71) Anmelder: **MANNESMANN Aktiengesellschaft**
**Mannesmannufer 2**
**D-4000 Düsseldorf 1(DE)**

(72) Erfinder: **Bischof, Stefan, Dipl.-Ing.**
**Forchenweg 14**
**D-7900 Ulm-Jungingen(DE)**
Erfinder: **Steppe, Erich**
**Kelternweg 51**
**D-7900 Ulm(DE)**

(74) Vertreter: **Meissner, Peter E., Dipl.-Ing. et al**
**Meissner & Meissner Patentanwälte**
**Herbertstrasse 22**
**D-1000 Berlin 33 Grunewald(DE)**

(54) **Befestigungsvorrichtung für Achsen in Büromaschinen, insbesondere in Druckern.**

(57) Bei Befestigungsvorrichtung für Achsen (2) Büromaschinen, insbesondere in Druckern, mit Achszapfen (2c), die Einstichnuten (2d) aufweisen, werden die Achsen (2) in Flächenbauteilen (1) gegen axiales Verschieben mittels federnden Elementen gesichert gelagert.

Eine wirtschaftlich herstellbare und montagebegünstigte Befestigungsvorrichtung wird dadurch geschaffen, daß die Achse (2) eine an dem Flächenbauteil (1) innen anliegende Schulter (2b) bildet, daß der an die Einstichnute (2d) anschließende Achszapfen (2c) in eine etwa länglich geformte Ausnehmung (4) im Flächenbauteil (1) einführbar ist, so daß der Achszapfen-Durchmesser (9) des Achszapfens (2c) in einem kleineren Kreisausschnitt (5) der länglich geformten Ausnehmung (4) anliegt, daß außen am Flächenbauteil (1) ein federelastisches Spannelement (10) zwischen Flächenbauteil (1) und Achszapfen (2c) in die Einstichnute (2d) über den Achszapfendurchmesser (9) hinweg einsetzbar und in der Einstichnute (2d) unter Federspannung quer zum Achszapfen (2c) verspannbar ist.

FIG. 1

EP 0 306 591 A1

## Befestigungsvorrichtung für Achsen in Büromaschinen, insbesondere in Druckern

Die Erfindung betrifft eine Befestigungsvorrichtung für Achsen in Büromaschinen, insbesondere in Druckern, mit Achszapfen, die Einstichnuten aufweisen und in Flächenbauteilen gegen axiales Verschieben mittels federnden Elementen gesichert gelagert sind.

Derartige Lager werden als Metall- oder Kunststoffbuchsen in Achsrichtung in Wandplatinen, Seitenwände u.dgl. von Druckern, wie z.B. von Matrixdruckern, eingesetzt und durch besondere Mittel verriegelt. Die Verriegelungen weisen den Nachteil auf, daß sie sich durch Beschleunigungskräfte, die beim Transportieren der Büromaschine entstehen und durch Erschütterungen während des Transports entriegeln.

Die bekannten Achslager sind jedoch auch unwirtschaftlich in der Herstellung und bei der Montage. Für den Montagevorgang sind meist mehrere Vorgänge notwendig, wobei die Montage ausschließlich von Hand erfolgen muß.

Die wirtschaftliche Entwicklung, Preisdruck und Wettbewerb zwingen neuerdings die Hersteller elektrischer Büromaschinen zu Überlegungen, derartige Lager zu vereinfachen, und zwar in herstellungstechnischer Sicht und bezüglich des Montagevorganges.

Der vorliegenden Erfindung liegt daher die Aufgabe zugrunde, eine wirtschaftlich herstellbare und montagebegünstigte Befestigungsvorrichtung für Achsen in Büromaschinen zu schaffen, die die Achse gleichzeitig in axialer und radialer Richtung spielfrei lagert. Hierbei sollen teure genaue Passungen an der Achse bzw. am Achslager vermieden werden.

Die gestellte Aufgabe wird auf der Grundlage der eingangs bezeichneten Befestigungsvorrichtung erfindungsgemäß dadurch gelöst, daß die Achse eine an dem Flächenbauteil innen anliegende Schulter bildet, daß der an die Einstichnute anschließende Achszapfen in eine etwa länglich geformte Ausnehmung im Flächenbauteil einführbar ist, so daß der Achszapfen-Durchmesser des Achszapfens in einem kleineren Kreisausschnitt der länglich geformten Ausnehmung anliegt, daß außen am Flächenbauteil ein federelastisches Spannelement zwischen Flächenbauteil und Achszapfen in die Einstichnute über den Achszapfendurchmesser hinweg einsetzbar und in der Einstichnute unter Federspannung quer zum Achszapfen verspannbar ist. Herstelltechnisch bedeutet dies, lediglich in dem Flächenbauteil eine entsprechend geformte Ausnehmung vorzusehen und das federelastische Spannelement herzustellen. Die Montage der ohnehin mit Einstichnuten versehenen Achsen ist denkbar einfach und schnell durchzuführen und gewährleistet einen hohen Sicherheitsgrad gegen Lösen des Befestigungselementes. Die Befestigungsvorrichtung ist jedoch sowohl axial als auch radial spielfrei. Dennoch ist es möglich, die Achse von Hand in eine gewünschte Umfangsstellung zu drehen.

In Weiterbildung der Erfindung ist vorgesehen, daß das federelastische Spannelement aus einem Ösenteil, einem daran anschließenden gewölbten Mittelteil und einem in Längserstreckung sich anschließenden hakenförmigen Fortsatz gebildet ist. Das federelastische Spannelement besteht daher aus einem in hohen Stückzahlen herstellbaren Stanz-Biege-Teil.

Eine andere Verbesserung der Erfindung besteht darin, daß in dem Flächenbauteil der etwa länglichen Ausnehmung in Längsrichtung im wesentlichen gegenüberliegend eine Formöffnung angeordnet ist, deren innere Begrenzung durch einen um den Mittelpunkt des kleineren Kreisausschnitts der länglichen Flächenbauteil-Ausnehmung ansteigenden Kurvenverlauf gebildet ist und daß an der inneren Begrenzung der hakenförmige Fortsatz des federelastischen Spannelementes anliegt bzw. am Ende der Kurve einrastet. Diese Maßnahmen bedeuten eine Zugspannung-Erzeugung für das federelastische Spannelement und zugleich eine Sicherung gegen Lösen des Spannelementes.

Es wird ferner vorgeschlagen, daß an die mit dem Kurvenverlauf ausgestattete Formöffnung des Flächenbauteils eine radial auf den Mittelpunkt des kleineren Kreisausschnitts der Flächenbauteil-Ausnehmung ausgerichtete Aussparung mit einer Breite angeschlossen ist, die größer als die Breite des hakenförmigen Fortsatzes des federelastischen Spannelementes ist. Die Aussparung erleichtert die Montage und das Aufbringen der Zugspannung und bildet damit eine Verbesserung der Verriegelungsmaßnahmen.

Ein Ausführungsbeispiel der Erfindung ist in der Zeichnung dargestellt und wird im folgenden näher beschrieben. Es zeigen:

Fig. 1 eine Draufsicht auf ein Flächenbauteil mit dem federelastischen Spannelement während des Einsetzvorgangs,

Fig. 2 eine Draufsicht wie Fig. 1 mit dem federelastischen Spannelement nach dem Einsetzvorgang in Verriegelungsstellung und

Fig. 3 eine Seitenansicht des Spannelementes mit dem Flächenbauteil im Querschnitt.

Als Ausführungsbeispiel ist ein Matrixdrucker gewählt. Das Flächenbauteil 1 besteht aus einer der Seitenplatinen eines Matrixdruckerrahmens. Als Achse 2 ist eine Schlittenführungsachse 2a gewählt. Zwei derartige Schlittenführungsachsen 2a bilden eine Führung für den den Druckkopf tragenden Schlitten eines Matrixdruckers.

Eine Schulter 2b der Achse 2 liegt an der Innenseite 1a des Flächenbauteils 1 an. Die Achse 2 besitzt einen Achszapfen 2c mit einer Einstichnute 2d.

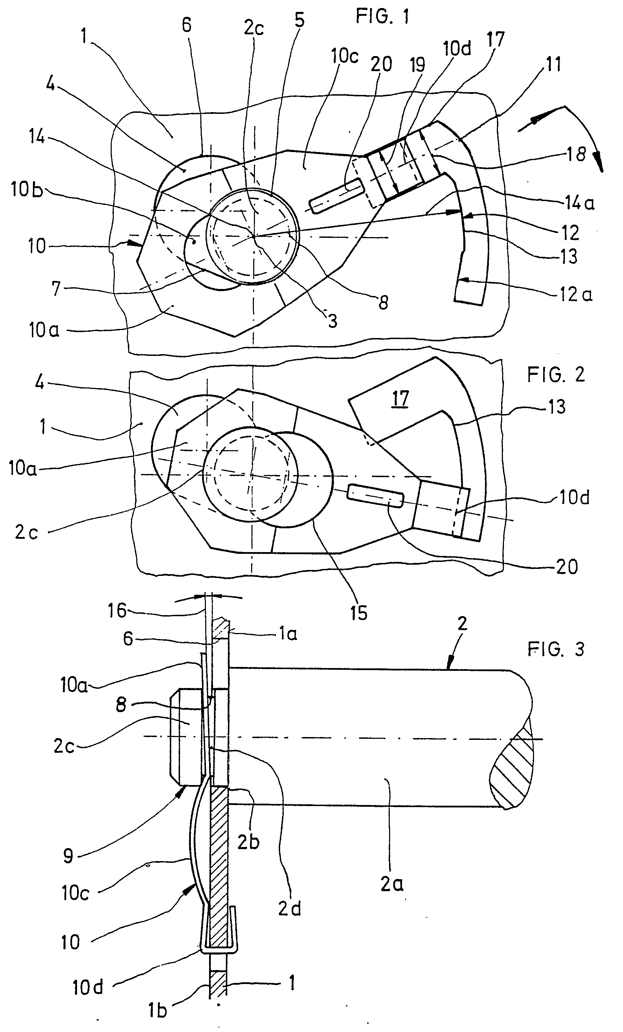

Das Flächenbauteil 1 weist in der vorgegebenen Achslage 3 (Fig. 1) eine etwa länglich geformte Ausnehmung 4 auf mit einem kleineren Ausschnitt 5 und einem größeren Kreisausschnitt 6, die beide zusammen durch tangentenförmige Begrenzungen 7 die etwa länglich geformte Ausnehmung 4 bilden. Der Achszapfen-Durchmesser 9 des Achszapfens 2c entspricht dem kleineren Kreisausschnitt 5. Hierbei läßt sich der Durchmesser 9 des Achszapfens 2c frei durch den größeren Kreisausschnitt 6 hindurchführen und damit die Achse 2 gegen den kleineren Kreisausschnitt 5 legen. Der Durchmesser 8 bestimmt die Einstichnute 2d.

Danach wird zwischen einer Außenseite 1b des Flächenbauteils 1 und dem Achszapfen 2c ein federelastisches Spannelement 10 in die Einstichnute 2d über den Achszapfendurchmesser 9 hinweg eingesetzt und in der Einstichnute 2d quer zum Achszapfen 2c gespannt und verriegelt, wie nachstehend noch genauer beschrieben wird.

Das federelastische Spannelement 10 ist aus einem Ösenteil 10a mit einer Öse 10b, einem daran anschließenden gewölbten Mittelteil 10c und einem in Längserstreckung sich anschließenden hakenförmigen Fortsatz 10d gebildet.

In dem Flächenbauteil 1 befindet sich gegenüberliegend zu der etwa länglichen Ausnehmung 4 eine Formöffnung 11, deren innere Begrenzung 12 durch einen ansteigenden Kurvenverlauf 13 gebildet ist, wobei der ansteigende Kurvenverlauf 13 gegenüber einem Kreisbogen definiert ist, der um einen Mittelpunkt 14 mit einem Radius 14a gezogen werden kann. Der Mittelpunkt 14 ist zugleich Mittelpunkt des kleineren Kreisausschnittes 5, der die Achslage 3 bestimmt und stimmt toleranzabhängig mit dem Achszapfen-Durchmesser 9 des Achszapfens 2c überein.

Der Ösenteil 10a weist eine schlüssellochförmige Öse 10b auf. Der größere Schlüssellochausschnitt 15 (Fig. 2) bildet einen freien Durchgang für den Achzapfendurchmesser 9. Die Federwirkung des federelastischen Spannelementes 10 wird außer durch den gewölbten Mittelteil 10c noch durch einen Biegewinkel 16 (Fig. 3) verstärkt.

Der hakenförmige Fortsatz 10d bildet durch eine 180 Grad-Biegung (Fig. 3) eine Führung für das federelastische Spannelement 10. Hierzu ist die Formöffnung 11 mit einer radial auf den Mittelpunkt 14 des kleineren Kreisausschnitts 5 der Flächenbauteil-Ausnehmung 4 ausgerichteten Aussparung 17 versehen. Die Aussparung 17 weist eine Breite 18 auf, die größer ist als die Breite 19 des hakenförmigen Fortsatzes 10d.

Nach dem Einsetzen des federelastischen Spannelementes 10 gemäß Fig. 1 wird dieses in Richtung der Formöffnung 11 gedreht und gezogen bis die Öse 10b in der Einstichnute 2d anliegt. Danach erreicht der hakenförmige Fortsatz 10d die Position, in der der Radius 14a vorliegt. Mit diesem Radius 14a stimmt die Bemessung des federelastischen Spannelementes 10 überein, so daß bei Weiterdrehen auf dem ansteigenden Kurvenverlauf 13 das Spannelement 10 unter Zugspannung gesetzt wird und die Achse 2 radial spielfrei in die Achslage 3 gedrückt wird, in der der Achszapfen-Durchmesser 9 gegen den kleineren kreisförmigen Ausschnitt 5 des Flächenbauteils 1 anliegt. Hierbei rastet der hakenförmige Fortsatz 10d in die Stufe 12a ein. Bei Veränderung der Krümmung des Mittelteils 10c während des Spannvorgangs wird das Ösenteil 10a verformt und legt sich unter einem Biegewinkel 16 an den dargestellten Bund der Einstichnute 2d und an den Flächenbauteil 1 kraftschlüssig an und gleicht damit Längentoleranzen aus. Die Achse 2 ist nunmehr axial und radial spielfrei in dem Flächenbauteil 1 gelagert und verriegelt. Es ist jedoch trotzdem möglich, die Achse 2 in eine gewünschte Umfangsstellung von Hand zu verdrehen.

Die Verriegelung oder Entriegelung des federelastischen Spannelements 10 erfolgt durch ein Werkzeug, das in eine Ausnehmung 20 eingesetzt wird.

## Ansprüche

1. Befestigungsvorrichtung für Achsen (2) in Büromaschinen, insbesondere in Druckern, mit Achszapfen (2c), die Einstichnuten (2d) aufweisen und in Flächenbauteilen (1) gegen axiales Verschieben mittels federnden Elementen gesichert gelagert sind,
dadurch gekennzeichnet,
daß die Achse (2) eine an dem Flächenbauteil (1) innen anliegende Schulter (2b) bildet, daß der an die Einstichnute (2d) anschließende Achszapfen (2c) in eine etwa länglich geformte Ausnehmung (4) im Flächenbauteil (1) einführbar ist, so daß der Achszapfen-Durchmesser (9) des Achszapfens (2c) in einem kleineren Kreisausschnitt (5) der länglich geformten Ausnehmung (4) anliegt, daß außen am Flächenbauteil (1) ein federelastisches Spannelement (10) zwischen Flächenbauteil (1) und Achszapfen (2c) in die Einstichnute (2d) über den Achszapfendurchmesser (9) hinweg einsetzbar und in der Einstichnute (2d) unter Federspannung quer zum Achszapfen (2c) verspannbar ist.

2. Befestigungsvorrichtung nach Anspruch 1,
dadurch gekennzeichnet,
daß das federelastische Spannelement (10) aus einem Ösenteil (10a), einem daran anschließenden gewölbten Mittelteil (10c) und einem in Längserstreckung sich anschließenden hakenförmigen Fortsatz (10d) gebildet ist.

3. Befestigungsvorrichtung nach den Ansprüchen 1 oder 2,
dadurch gekennzeichnet,
daß in dem Flächenbauteil (1) der etwa länglichen Ausnehmung (4) in Längsrichtung im wesentlichen gegenüberliegend eine Formöffnung (11) angeordnet ist, deren innere Begrenzung (12) durch einen um den Mittelpunkt (14) des kleineren Kreisausschnitts (5) der länglichen Flächenbauteil- Ausnehmung (4) ansteigenden Kurvenverlauf (13) gebildet ist und daß an der inneren Begrenzung (12) der hakenförmige Fortsatz (10d) des federelastischen Spannelementes (10) anliegt bzw. am Ende der Kurve (13) einrastet.

4. Befestigungsvorrichtung nach einem oder mehreren der Ansprüche 1 bis 3,
dadurch gekennzeichnet,
daß an die mit den Kurvenverlauf (13) ausgestattete Formöffnung (11) des Flächenbauteils (1) eine radial auf den Mittelpunkt (14) des kleineren Kreisausschnitts (5) der Flächenbauteil-Ausnehmung (4) ausgerichtete Aussparung (17) mit einer Breite (18) angeschlossen ist, die größer als die Breite des hakenförmigen Fortsatzes (10d) des federelastischen Spannelementes (10) ist.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 089 633 (SIEMENS AG) <br> * Figur 2 * <br> --- | 1 | B 41 J 29/02 <br> F 16 B 21/16 |
| A | DE-B-2 512 274 (SIEMENS AG) <br> * Figur * <br> --- | 1 | |
| A | US-A-3 857 644 (Y. MIKAMI) <br> * Zusammenfassung; Figuren 1-6 * <br> --- | 1 | |
| A | IBM TECHNICAL DISCLOSURE BULLETIN, Band 27, Nr. 12, Mai 1985, Seiten 6820-6821, New York, US; "Automated assembly clip" <br> * vollständiges Dokument * <br> ----- | 1 | |

### RECHERCHIERTE SACHGEBIETE (Int. Cl.4)

B 41 J 29/02
F 16 B 21/00
F 16 C 35/00

Der vorliegende Recherchenbericht wurde für alle Patentansprüche erstellt

| Recherchenort | Abschlußdatum der Recherche | Prüfer |
|---|---|---|
| BERLIN | 18-04-1988 | ZOPF K |